# EUROPÄISCHE PATENTSCHRIFT

(11) **EP 1 935 700 B1**
(45) Veröffentlichungstag und Bekanntmachung des Hinweises auf die Patenterteilung: **27.03.2013**
(21) Anmeldenummer: 07022744.2
(22) Anmeldetag: 23.11.2007
(51) Int. Cl.: B60K 15/00

(54) **Satteltank**
Saddle tank
Réservoir en forme de selle

(30) Priorität: 20.12.2006 DE 102006060274
(43) Veröffentlichungstag der Anmeldung: 25.06.2008
(73) Patentinhaber: GM Global Technology Operations LLC, Detroit, MI 48265-3000 (US)
(72) Erfinder: Bleuel, Walter, 65719 Hofheim (DE)
(74) Vertreter: Strauss, Peter

(56) Entgegenhaltungen:
- DE-A1- 10 107 075
- DE-A1- 19 900 378
- GB-A- 2 428 415

## Beschreibung

Die Erfindung betrifft einen Satteltank für Verbrennungsmotoren von Kraftfahrzeugen.

Satteltanks für Verbrennungsmotoren von Kraftfahrzeugen sind allgemein bekannt. Hierbei handelt es sich um einen Kraftstoffbehälter mit einer ersten Kammer, die über einen Sattel kraftstoffzuführend mit einer zweiten Kammer verbunden ist. Sinkt der Kraftstoffpegel unter ein Niveau, das unterhalb einer unteren Sattelfläche des Sattels liegt, so sind die beiden Kammern hydrodynamisch entkoppelt. In diesem Fall bedarf es einer Pumpe oder einer Venturidüse, um Kraftstoff von einer Kammer in die andere zu befördern, in der sich der Beruhigungstopf befindet. Zu diesem Zweck besitzt der Satteltank für jede Kammer einen separaten Flansch, durch den jeweils Kraftstoffleitungen und elektrische Leitungen zur jeweiligen Pumpe beziehungsweise Venturidüse geführt sind. Ein Satteltank mit allen Merkmalen des Oberbegriffs des Anspruchs 1 ist aus DE 199 00378 A1 bekannt.

Es ist eine Aufgabe einer Ausführungsform der Erfindung, einen Satteltank der eingangs genannten Art bereitzustellen, der mit nur einem Flansch für beide Pumpen beziehungsweise beide Venturidüsen auskommt.

Die Lösung dieser Aufgabe erfolgt mit den Merkmalen des unabhängigen Anspruchs 1. Vorteilhafte Weiterbildungen und weitere Ausführungsformen ergeben sich mit den Merkmalen der abhängigen Ansprüche.

Die Erfindung betrifft einen Satteltank für Verbrennungsmotoren von Kraftfahrzeugen. Der Satteltank umfasst daher eine erste Kammer, die über einen Sattel kraftstoffzuführend mit einer zweiten Kammer verbunden ist. Der Satteltank verfügt über einen länglichen Ausleger, der an einem Ende mit einem in der ersten Kammer befindlichen Beruhigungstopf verbunden ist und zum anderen Ende hin auf einer unteren Sattelfläche des Sattels aufliegt. Am anderen Ende des Auslegers befindet sich ferner eine drehbar gelagerte Halterung für eine Venturidüse oder eine Pumpe.

Der Satteltank besitzt einen Flansch für den Beruhigungstopf, welcher sich in einer ersten Kammer K1 befinden möge. Bei der Montage wird durch diesen Flansch der Ausleger mit Halterung eingebracht. Die an der Halterung befestigte Venturidüse oder Pumpe ist dann der zweiten Kammer zugeordnet beziehungsweise ist dann in der zweiten Kammer angeordnet. Diese Konstruktion ermöglicht es, die für die zweite Kammer K2 vorgesehene Venturidüse oder Pumpe über den der ersten Kammer K1 zugeordneten Flansch in das Innere einzuführen. Im Ergebnis ist damit kein zweiter Flansch für die zweite Kammer K2 erforderlich. Damit wird die Herstellung des Satteltanks vereinfacht, da der Flansch typischerweise nach Bereitstellung des blasgeformten Satteltanks eingebracht wird. Weiterhin werden separate Kraftstoffleitungen und elektrische Zuleitungen durch den zweiten Flansch eingespart, da diese sämtlich über die Kombination von Ausleger und Halterung geführt werden können. Beide Aspekte führen zu geringeren Kosten des Satteltanks. Darüber hinaus ermöglicht das Einsparen des zweiten Flansches eine Optimierung der Tankgeometrie und darüber eine optimierte Ausnutzung des vorhandenen Raumes im Kraftfahrzeug und damit des Kraftstoffbehältervolumens.

In einer weiteren Ausführungsform ist der Ausleger ein biegbares Rohr, z.B. ausgeführt als Wellrohr. Dieses Rohr, z.B. aus PA11, ist einerseits flexibel bzw. biegbar, damit es durch den Flansch eingeführt und dann innerhalb des Kraftstoffbehälters in Position gebracht werden kann. Andererseits ist es hierzu auch hinreichend steif, damit es, wenn einmal in Position gebracht, dort stabil verbleibt. Es schützt alle über den Ausleger geführten Kraftstoffleitungen und elektrischen Zuleitungen nach außen hin und ermöglicht es gleichzeitig, Kraftstoff von der zweiten Kammer K2 durch den Ausleger hindurch in den Beruhigungstopf fließen zu lassen, der sich in der ersten Kammer K1 befindet.

In einer weiteren Ausführungsform ist für das andere Ende des Auslegers eine Abstützung gegenüber der Oberschale des Satteltanks vorgesehen. Dies gewährleistet eine stabile mechanische Positionierung des Auslegers auch beim bewegten Fahrzeug. Hierbei soll darauf hingewiesen werden, dass der Satteltank nicht wie bei früheren Kraftstoffbehältern in Blechbauweise aus einer Oberschale und einer Unterschale zusammengesetzt sein muss, sondern sich der Begriff Oberschale allgemein auf den oberen Bereich des Kraftstoffbehälters bezieht.

In einer weiteren Ausführungsform ist am anderen Ende des Auslegers ein Ansatzstück befestigt, an dem die Halterung und die Abstützung jeweils drehbar gelagert sind. Die Abstützung ermöglicht es, die Einheit aus Ausleger und Halterung in einer ersten, länglichen Ausrichtung erst durch den Flansch, dann durch eine seitliche Öffnung im Beruhigungstopf in die Kammer K1 einzuführen und durch Auflegen auf die untere Sattelfläche in Position zu bringen. Dies kann so erfolgen, dass der Ausleger durch eine geeignete Form das Einführen ermöglicht und anschließend durch eine Drehung um 90° in die Nennlage gebracht wird. Der Ausleger ist dann am Beruhigungstopf verdrehsicher gelagert und dort verrastet. Die Wahl des Ansatzstücks ermöglicht es insofern in Kombination mit der drehbaren Lagerung von Abstützung und Halterung, die genannte Einheit bei dem begrenzten zur Verfügung stehenden Raum in das Innere des Satteltanks einzuführen.

Ferner ist eine Ausführungsform vorgesehen, bei der eine an der Halterung und an der Abstützung angreifende Feder vorgesehen ist, die von einer ersten druckbeanspruchten Stellung über einen Totpunkt hinweg in eine zweite druckbeanspruchte Stellung überführbar ist. Der Auslöser zum Überführen der Feder von einer Stellung in die andere kann ein Faden oder kann ein Draht bzw. Kabel sein.

In einer weiteren Ausführungsform ist für das Überführen von Kraftstoff aus der Kammer K2 in die Kammer K1 eine Kraftstoffleitung vorgesehen, die abschnittsweise einen größeren Durchmesser hat. Dies ermöglicht es, sich beim Ziehen an der Kraftstoffleitung die Querschnittsverengung dahingehend nutzbar zu machen, dass dadurch ein mechanisches Element bewegt wird, mit dem die oben genannte Feder von der ersten druckbeanspruchten Stellung, der Montagestellung, über den Totpunkt in die zweite druckbeanspruchte Stellung, die Funktionsstellung, überführt wird. Dies kann derart erfolgen, dass die Kraftstoffleitung allgemein in ihrem gebogenen Abschnitt im Bereich des Ansatzstücks als Wellrohr ausgeführt ist, beim besagten mechanischen Element aber keine Wellung hat. Wird an der Kraftstoffleitung gezogen, so wird die Durchtrittsvergrößerung für die Bewegung des mechanischen Elements genutzt.

Ferner wird eine Ausführungsform bereitgestellt, bei der die Halterung das Entspannungsrohr der Venturidüse ist oder dieses umfasst. Diese Ausführungsform ist bei geringem Gewicht baulich besonders einfach.

Bei der Auslegung der Ausführungsform des letzten Absatzes wird das Überführen von Kraftstoff aus der Kammer K2 in die Kammer K1 besonders leicht, wenn das dem Ausleger zugewandte Ende des Entspannungsrohrs zu einem Überlauf verbreitert ist. Nachdem der Kraftstoff durch das Entspannungsrohr geflossen ist, ergießt er sich in den Überlauf und kann von dort in den als Schlauch oder Rohr ausgebildeten Ausleger hineinfließen. Hierbei bietet es sich an, wenn der Auflagepunkt des Auslegers auf der unteren Sattelfläche oberhalb der Befestigungsstelle des Auslegers am Beruhigungstopf ist, sodass der Kraftstoff wegen der entsprechenden Neigung des Auslegers nach unten in den Beruhigungstopf fließt.

Bei einer weiteren Ausführungsform ist an der Halterung ein Tankmessgerät montiert, dessen elektrische Zuleitung am Ausleger entlang oder durch den Ausleger hindurch zum Flansch des Beruhigungstopfs geführt ist. Mit dem Tankmessgerät kann das Füllstandsniveau in der Kammer K2 bestimmt werden. Durch diese Positionierung und diese Verlegung der elektrischen Zuleitungen wird ein zweiter Flansch vermieden.

Weiterhin ist eine Ausführungsform vorgesehen, bei der an der Halterung ein Schwimmer drehbar gelagert ist. Der Schwimmer dient, die allgemein üblich, die Bestimmung des Füllstandsniveaus in der Kammer K2.

Weitere Merkmale und Vorteile der beanspruchten Erfindung werden aus der folgenden detaillierten Beschreibung mit Bezug auf die beigefügten Zeichnungen erkennbar, die nachfolgend als nicht beschränkende Beispiele angegeben sind. Hierbei soll die Benutzung von Bezugszeichen in den Figuren nicht dahingehend verstanden werden, dass die Bezugszeichen den Schutzumfang der beanspruchten Erfindung einschränken sollen. Es zeigen:
- Fig. 1: einen Satteltank mit Ausleger und Halterung in der Übersicht,
- Fig. 2: die Kammer K2 des Satteltanks mit der eingebrachten Halterung in ihrer Montagestellung,
- Fig. 3: die Kammer K2 des Satteltanks mit der eingebrachten Halterung in ihrer Funktionsstellung,
- Fig. 4: Das Ansatzstück des Auslegers,
- Fig. 5: die Abstützung in Montage- und Funktionsstellung,
- Fig. 6: die erste und die zweite druckbelastete Stellung der zur Halterung gehörenden Feder,
- Fig. 7: die Halterung in Montage- und Funktionsstellung.
- Fig. 8: die Kraftstoffleitung in der Montage- und der Funktionsstellung.

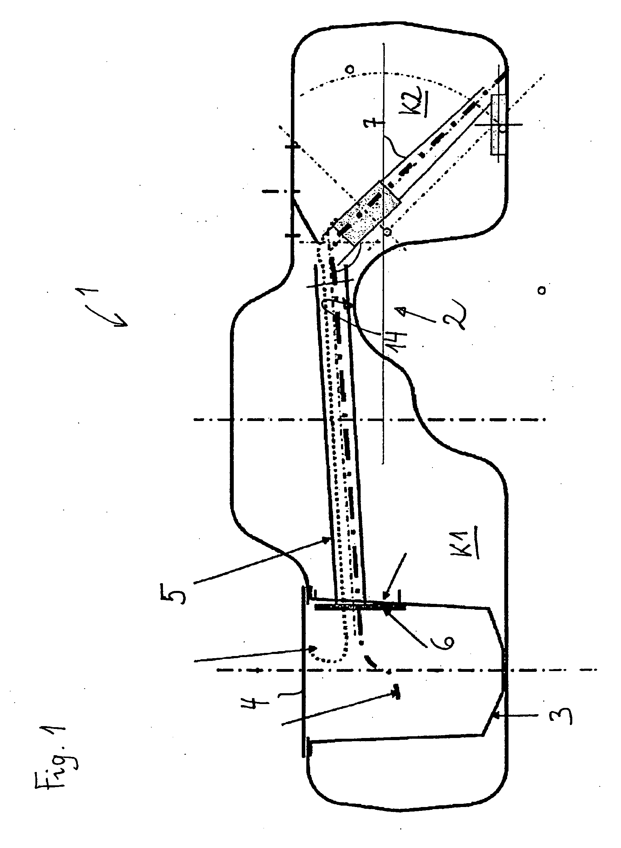

Bei den Figuren, die allgemein mit gleichen Bezugszeichen gleiche Gegenstände bezeichnen, zeigt Figur 1 einen Satteltank 1 mit einer ersten Kammer K1 und einer zweiten Kammer K2, die von einem Sattel 2 voneinander getrennt werden. Der Sattel bzw. der Bereich zwischen den beiden Kammern K1, K2 dient zur Durchführung der Antriebswelle sowie des Auspuffrohrs. In der ersten Kammer K1 befindet sich ein Beruhigungstopf 3. Die Kammer K1 verfügt über einen Flansch 4, der nachträglich in den blasgeformten Satteltank 1 eingebracht wird.

Der Satteltank 1 verfügt über einen Ausleger 5, der an seinem einen Ende über einen Träger 6 mit dem Beruhigungstopf 3 verbunden ist. Am anderen Ende des Auslegers 5 befindet sich eine Halterung 7 für eine Venturidüse oder eine Pumpe.

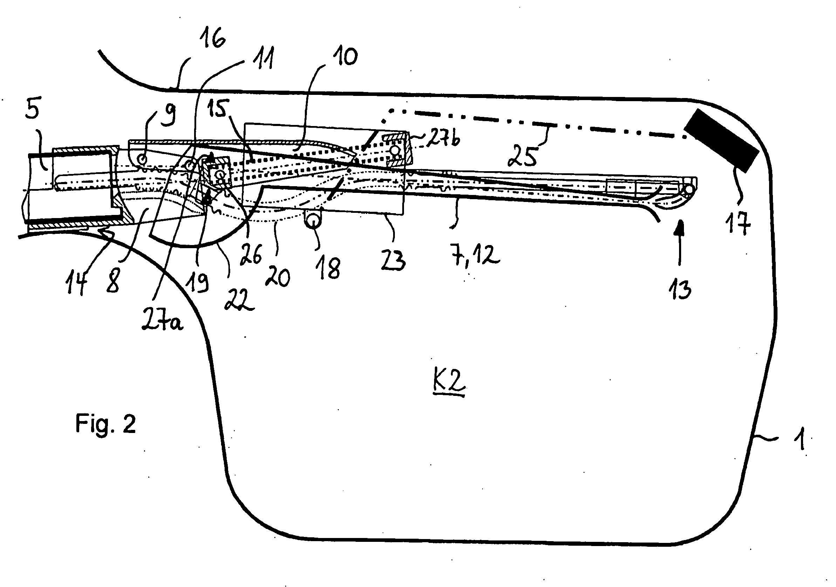

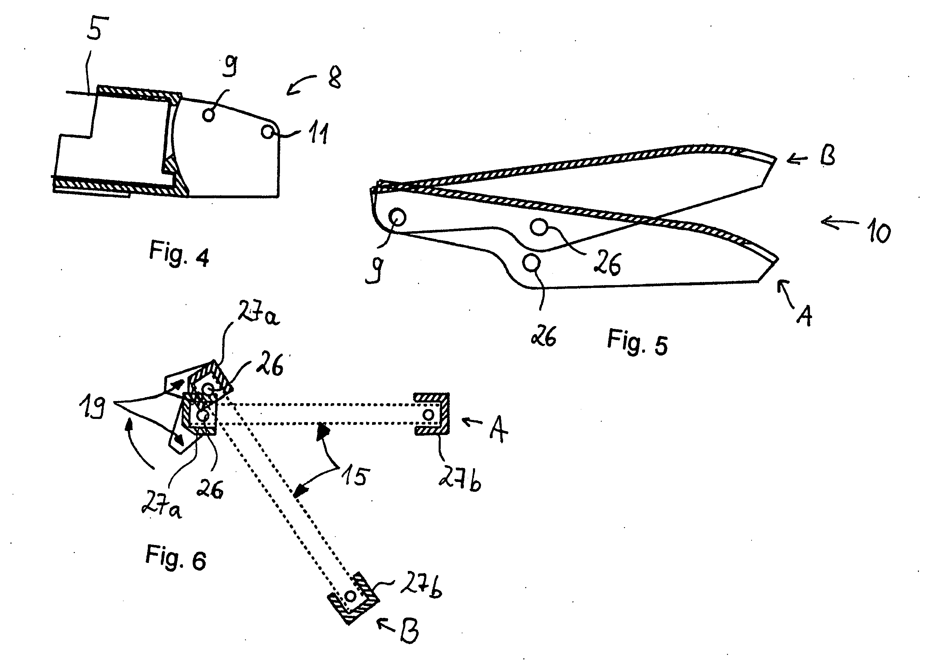

Figur 2 zeigt die Kammer K2 des Satteltanks 1 der Figur 1. Am anderen bzw. rechten Ende des Auslegers 5 befindet sich ein Ansatzstück 8, vgl. hierzu auch die Figur 4. An diesem ist drehbar um die Achse 9 eine Abstützung 10 befestigt, vergleiche hierzu auch Figur 5. Weiterhin verfügt das Ansatzstück 8 über eine Achse 11, um die sich das Entspannungsrohr 12 der Venturidüse 13 drehen lässt. Wie später noch näher erläutert werden wird, fungiert das Entspannungsrohr 12 als Halterung 7.

Figur 2 zeigt die Einheit aus Ausleger 5 und Halterung 7 in ihrer Montagestellung. Bei der Montage des Satteltanks 1 wird die in Figur 2 gezeigte Einheit aus Ausleger 5 und Halterung 7 zuerst durch den Flansch 4 in den Satteltank 1 eingebracht, wird dann durch die Öffnung im Beruhigungstopf 3 im Bereich des Trägers 6 durchgeführt und kommt dann auf der unteren Sattelfläche 14 des Sattels 2 zu liegen.

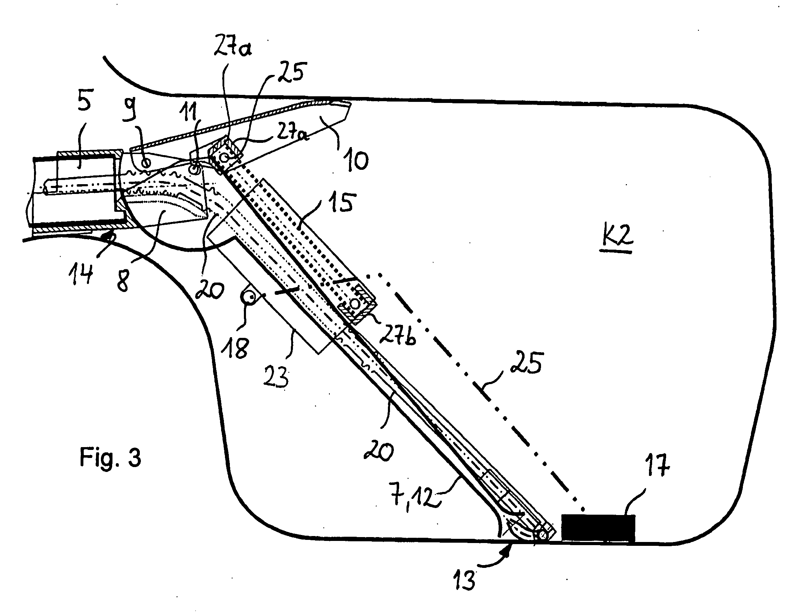

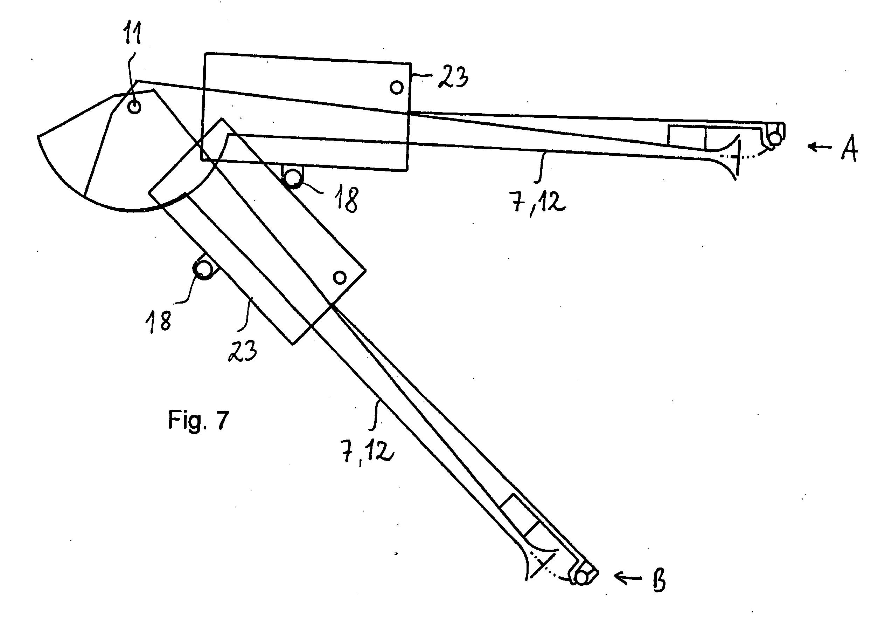

Anschließend wird bei einer Entriegelung, vergleiche hierzu Figur 6, eine Feder 15 durch Drehen um die Achse 26 von einer ersten druckbelasteten Stellung A in eine zweite druckbelastete Stellung B, d.h. der Funktionsstellung, überführt. Hierbei schwenkt die Abstützung 10 von der Montagestellung A ausgehend um die Achse 9 nach oben in die Funktionsstellung B, vgl. Figur 5. Sie stützt sich dann gegen die Oberschale 16 ab. Die Stellung der Halterung 7 wird dabei von der in Figur 2 gezeigten Montagestellung A in die in Figur 3 gezeigte Funktionsstellung B überführt, vgl. hierzu auch Figur 7. Die Halterung 7 wird dann durch die Federspannung gegen den Satteltankboden gedrückt. Bei der Entriegelung wird der Schwimmerhebel 25 ebenfalls freigegeben und schwenkt mit dem Schwimmer 17 ebenfalls nach unten, da er über eine Drehachse 18 drehbar an der Halterung 7 gelagert ist.

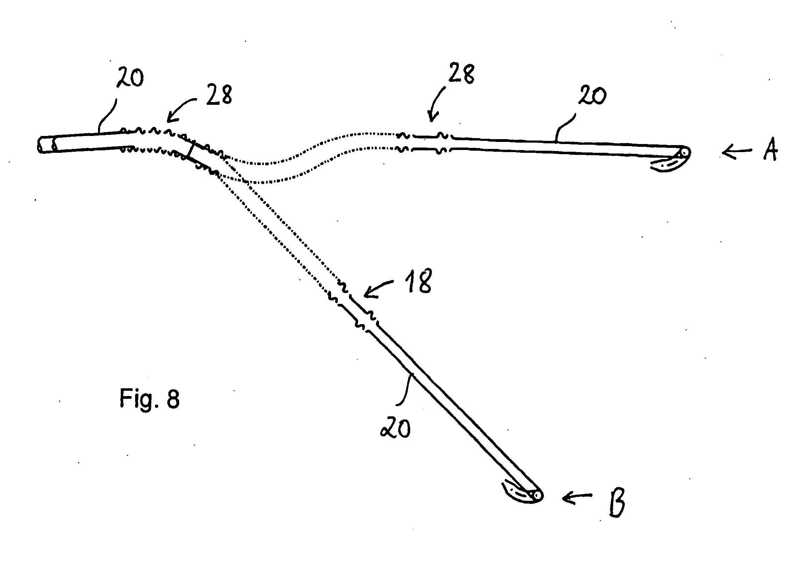

Zum Entriegeln, d.h. dem Betätigen der Feder 15, verfügt das Federlager 27a über ein u-förmiges Teil 19, das in der Figur 2 zu erkennen ist, vgl. auch Figur 6. Weiterhin ist die Kraftstoffleitung 20 abschnittsweise als Wellschlauch ausgeführt. In der Montagestellung ist die am u-förmigen Teil 19 vorbei geführte Kraftstoffleitung 20 ohne Wellen versehen. Zieht man vom Flansch 4 her an der Kraftstoffleitung 20, so gelangt ein Wellschlauchabschnitt 28, vgl. Figur 8, zum u-förmigen Teil 19 des Federlagers 27a. Durch die dortige Durchmesservergrößerung der Kraftstoffleitung 20 wird der u-förmige Teil 19 gemäß Figur 19 in Pfeilrichtung bewegt und dabei angehoben. Hierdurch überschreitet die Feder 15 einen Totpunkt und wird von ihrer ersten druckbelasteten Stellung A in die zweite druckbelastete Stellung B überführt.

Im Einsatz gelangt Kraftstoff durch die Kraftstoffleitung 20 hindurch über den Ausleger 5 und die Halterung 7 zur Venturidüse 13, wo in deren Saugbereich 21 Kraftstoff aus der Kammer K2 angesaugt wird. Der Kraftstoff gelangt dann in das Entspannungsrohr 12, der in einen Überlauf 22 mündet. Aus der in Figur 3 gezeigten Betriebsstellung geht hervor, dass dann der Kraftstoff vom Überlauf 21 in den als flexibles Rohr ausgebildeten Ausleger 5 strömen kann, der als flexibler Schlauch ausgeführt ist. Aus Figur 1 ist ersichtlich, dass der Kraftstoff vom Ausleger 5 her direkt in den Beruhigungstopf 3 strömt.

Das Kraftstoffniveau wird in Kammer K2 mithilfe des Tankmessgeräts 23 gemessen, das über elektrische Zuleitungen 24 mit der Bordelektronik verbunden ist. Sie werden hierbei, wie in Figur 1 ersichtlich, am Ausleger 5 entlang geführt und werden dann durch den Flansch 4 geführt.

Obwohl vorstehend konkrete Ausführungsformen beschrieben wurden, wird der Fachmann erkennen, dass die Beschreibung dieser Ausführungsformen nicht zum Zweck hat, die Erfindung in der angegebenen Form zu beschränken. Die Erfindung soll vielmehr alle Modifikationen, Äquivalente und Alternativen umfassen, die in den Schutzumfang der beanspruchten Erfindung fallen.

### Bezugszeichenliste

- 01: Satteltank
- 02: Sattel
- 03: Beruhigungstopf
- 04: Flansch
- 05: Ausleger
- 06: Träger
- 07: Halterung
- 08: Ansatzstück
- 09: Drehachse
- 10: Abstützung
- 11: Drehachse
- 12: Entspannungsrohr
- 13: Venturidüse
- 14: untere Sattelfläche
- 15: Feder
- 16: Oberschale
- 17: Schwimmer
- 18: Drehachse
- 19: u-förmiges Teil
- 20: Kraftstoffleitung
- 21: Saugbereich
- 22: Überlauf
- 23: Tankmessgerät
- 24: elektrische Zuleitung
- 25: Schwimmerhebel
- 26: Achse
- 27a: Federlager
- 27b: Federlager
- 28: Wellschlauchabschnitt
- A: Montagestellung
- B: Funktionsstellung

## Patentansprüche

1. Satteltank für Verbrennungsmotoren von Kraftfahrzeugen, umfassend:
einen länglichen Ausleger (5), der an einem Ende mit einem in einer ersten Kammer (K1) befindlichen Beruhigungstopf (3) verbunden ist, **dadurch gekennzeichnet, dass** a) der Ausleger (5) zum anderen Ende die Auslegers hin auf einer unteren Sattelfläche (14) des Sattels (2) aufliegt und dass der Satteltank
b) eine am anderen Ende des Auslegers drehbar gelagerte Halterung (7) für eine Venturidüse (13) oder eine Pumpe aufweist.

2. Satteltank nach Anspruch 1, bei dem der Ausleger ein biegbares Rohr ist.

3. Satteltank nach einem der vorherigen Ansprüche, bei dem für das andere Ende des Auslegers eine Abstützung (10) gegenüber der Oberschale (16) des Satteltanks vorgesehen ist.

4. Satteltank nach Anspruch 3, bei dem am anderen Ende des Auslegers ein Ansatzstück (8) befestigt ist, an dem die Halterung und die Abstützung jeweils drehbar gelagert sind.

5. Satteltank nach einem der Ansprüche 3 oder 4, mit einer an der Halterung und an der Abstützung angreifenden Feder (15), die von einer ersten druckbeanspruchten Stellung über einen Totpunkt in eine zweite druckbeanspruchte Stellung überführbar ist.

6. Satteltank nach Anspruch 5, bei dem zum Überführen eine Kraftstoffleitung (20) zur Venturidüse vorgesehen ist, die abschnittsweise einen größeren Durchmesser hat.

7. Satteltank nach Anspruch 6, bei dem die Kraftstoffleitung (20) abschnittsweise als Wellrohr ausgebildet ist.

8. Satteltank nach einem der vorherigen Ansprüche, bei dem die Halterung das Entspannungsrohr der Venturidüse ist oder dieses umfasst.

9. Satteltank nach Anspruch 8, bei dem das dem Ausleger zugewandte Ende des Entspannungsrohrs als einem Überlauf (21) ausgebildet ist.

10. Satteltank nach einem der vorherigen Ansprüche, bei dem an der Halterung ein Tankmessgerät (23) montiert ist, dessen elektrische Zuleitung (24) am Ausleger entlang oder durch den Ausleger hindurch zum Flansch (4) des Beruhigungstopfs geführt ist.

11. Satteltank nach einem der vorherigen Ansprüche, bei dem an der Halterung ein Schwimmerhebel (25) drehbar gelagert ist.

## Claims

1. A saddle tank for internal combustion engines of motor vehicles, comprising:
an elongated extension arm (5) which is connected at one end with a settling pot (3) disposed in a first chamber (K1), **characterized in that** the extension arm (5) rests towards the other end of the extension arm on a bottom saddle surface (14) of the saddle (2), and that the saddle tank comprises a holder (7) for a venturi nozzle (13) or a pump, said holder (7) being rotatably mounted at the other end of the extension arm.

2. A saddle tank according to claim 1, wherein the extension arm is a flexible tube.

3. A saddle tank according to one of the preceding claims,
wherein a support (10) against the upper shell (16) of the saddle tank is provided for the other end of the extension arm.

4. A saddle tank according to claim 3, wherein a joining piece (8) on which the holder and the support are respectively rotatably mounted is fixed to the other end of the extension arm.

5. A saddle tank according to one of the claims 3 or 4, comprising a spring (15) which acts on the holder and the support and which can be transferred from a first compressed position via a dead center to a second compressed position.

6. A saddle tank according to claim 5, wherein a fuel line (20) is provided for transfer to the venturi nozzle which has a larger diameter in sections.

7. A saddle tank according to claim 6, wherein the fuel line (20) is arranged in sections as a corrugated tube.

8. A saddle tank according to one of the preceding claims,
wherein the holder is the flash tube of the venturi nozzle or encloses the same.

9. A saddle tank according to claim 8, wherein the end of the flash tube facing the extension arm is arranged as an overflow (21).

10. A saddle tank according to one of the preceding claims,
wherein a tank measuring device (23) is mounted on the holder, the electrical feed line (24) of which is guided along or through the extension arm to the flange (4) of the settling pot.

11. A saddle tank according to one of the preceding claims,
wherein a floater lever (25) is rotatably held on the holder.

## Revendications

1. Réservoir de selle pour moteurs à combustion interne de véhicules à moteur, comprenant :
un bras (5) allongé qui est relié à une extrémité avec un pot de stabilisation (3) situé
dans une première chambre (K1),
**caractérisé en ce que**
a) le bras (5) repose à son autre extrémité sur une surface de selle inférieure (14) de la selle (2),
et **en ce que** le réservoir de selle
b) présente une fixation (7) supportée avec possibilité de rotation à l'autre extrémité du bras pour un venturi (13) ou une pompe.

2. Réservoir de selle selon la revendication 1, dans lequel le bras est un tuyau flexible.

3. Réservoir de selle selon l'une des revendications précédentes, dans lequel est prévu pour l'autre extrémité du bras un appui (10) vis-à-vis de la coque supérieure (16) du réservoir de selle.

4. Réservoir de selle selon la revendication 3, dans lequel une pièce formant un épaulement (8) est fixée à l'autre extrémité du bras et porte la fixation et l'appui, chacun avec possibilité de rotation.

5. Réservoir de selle selon l'une des revendications 3 ou 4, avec un ressort (15) en prise sur la fixation et sur l'appui, qui peut être amené d'une première position contrainte en compression à une deuxième position contrainte en compression en passant par un point mort.

6. Réservoir de selle selon la revendication 5, dans lequel est prévue pour le transfert une conduite de carburant (20) menant au venturi, qui a un plus grand diamètre dans certaines sections.

7. Réservoir de selle selon la revendication 6, dans lequel la conduite de carburant (20) est réalisée dans certaines sections comme un tuyau ondulé.

8. Réservoir de selle selon l'une des revendications précédentes, dans lequel la fixation est le tuyau de détente du venturi ou inclut celui-ci.

9. Réservoir de selle selon la revendication 8, dans lequel l'extrémité du tube de détente tournée vers le bras est conçue comme un trop-plein (21).

10. Réservoir de selle selon l'une des revendications précédentes, dans lequel est monté sur la fixation un appareil de mesure du réservoir (23) dont la ligne d'alimentation électrique (24) est passée le long du bras ou à travers le bras jusqu'à la bride (4) du pot de stabilisation.

11. Réservoir de selle selon l'une des revendications précédentes, dans lequel un levier à flotteur (25) est supporté avec possibilité de rotation sur la fixation.
